# EUROPÄISCHE PATENTSCHRIFT

(11) **EP 3 560 809 B1**
(45) Veröffentlichungstag und Bekanntmachung des Hinweises auf die Patenterteilung: **07.07.2021**
(21) Anmeldenummer: 19168777.1
(22) Anmeldetag: 11.04.2019
(51) Int. Cl.: B62K 21/18, B62K 21/22

(54) **VORBAU-VERBINDUNGSEINRICHTUNG SOWIE FAHRRAD-ELEMENT**
HANDLEBAR STEM CONNECTION DEVICE AND BICYCLE ELEMENT
DISPOSITIF DE RACCORDEMENT DE POTENCE AINSI QU'ÉLÉMENT DE VÉLO

(30) Priorität: 18.04.2018 DE 202018001990 U
(43) Veröffentlichungstag der Anmeldung: 30.10.2019
(73) Patentinhaber: Canyon Bicycles GmbH, 56073 Koblenz (DE)
(72) Erfinder: SCHUCHNIGG, Lukas, 56068 Koblenz (DE)
(74) Vertreter: dompatent von Kreisler Selting Werner - Partnerschaft von Patent- und Rechtsanwälten mbB

(56) Entgegenhaltungen:
- DE-A1-102007 014 678
- DE-C- 172 901
- DE-U1-202015 002 911
- US-A- 5 201 242
- US-A1- 2017 233 029

## Beschreibung

Die Erfindung betrifft ein Fahrrad-Element mit einer Vorbau-Verbindungseinrichtung.

Vorbau-Verbindungseinrichtungen dienen dazu, den Vorbau eines Fahrrads, der den Fahrradlenker trägt, mit einem Gabelschaft einer Vorderradgabel zu verbinden. Hierzu ist es bekannt, dass ein Vorbau ein oberes Ende des Gabelschaftes, das über das Gabelrohr des Rahmens in montiertem Zustand vorsteht, oberhalb des Gabelrohrs umgibt. Der Vorbau ist in diesem Bereich beispielsweise geschlitzt, sodass ein klemmendes Befestigen des den Gabelschaft umgebenden Vorbaus durch in tangentiale Richtung zum Gabelschaft verlaufende Schrauben erfolgen kann. Derartige Befestigungen weisen den Nachteil auf, dass eine Änderung der Höhe des Vorbaus nur möglich ist, wenn der Gabelschaft abgelängt ist. Bei einem abgelängten Gabelschaft ist ein Verlegen des Vorbaus nach oben nicht mehr möglich.

Des Weiteren sind Vorbau-Verbindungseinrichtungen bekannt, bei denen der Vorbau einen rohrförmigen Ansatz aufweist, der in den Gabelschaft eingeführt wird. Die Unterseite des rohrförmigen Ansatzes des Vorbaus ist hierbei abgeschrägt. In diesem Bereich ist ein ebenfalls abgeschrägtes Klemmelement vorgesehen. Über eine lange Schraube ist das Klemmelement mit einer Oberseite des Vorderbaus verbunden, sodass durch Anziehen der Schraube das Klemmelement aufgrund der Abschrägung nach außen gedrückt wird. Hierdurch wird der rohrförmige Ansatz des Vorbaus im inneren des Gabelschaftes klemmend fixiert. Diese Art der Befestigung des Vorbaus im Gabelschaft weist insbesondere den Nachteil auf, dass durch gesonderte Bauteile ein Fixieren und Vorspannen der Lenkkopflager erfolgen muss.

Aus DE 10 2007 014 678, das alle Merkmale des Oberbegriffs des Anspruchs 1 offenbart, ist eine Vorbau-Verbindungseinrichtung bekannt, bei der der Vorbau über ein in Fahrtrichtung dem Gabelschaft vorgelagertes Klemmelement mit dem Gabelrohr verbunden wird.

Aufgabe der Erfindung ist es einFahrrad-Element zu schaffen, mit der eine einfache und zuverlässige Verbindung zwischen dem Vorbau und dem Gabelschaft möglich ist.

Die Lösung der Aufgabe erfolgt erfindungsgemäß durch ein Fahrrad-Element gemäß Anspruch 1.

Die Erfindung ist ein Fahrrad-Element. Hierbei handelt es sich um einen Teil eines Fahrrads. Das erfindungsgemäße Fahrrad-Element weist einen Fahrradrahmen mit einem Gabelrohr auf. Der Fahrrad-Rahmen kann ferner je nach Ausgestaltung ein Oberrohr, ein Unterrohr und ein Sattelrohr sowie ggf. einen gefederten oder ungefederten Hinterbau aufweisen. Das Gabelrohr dient zur Aufnahme des mit dem Gabelrohr verbundenen insbesondere einstückig ausgebildeten Gabelschafts sowie des Vorbauschafts.

Die Vorbau-Verbindungseinrichtung dient zum Verbinden eines Lenkervorbaus mit einer Vorderradgabel. Die Vorbau-Verbindungseinrichtung umfasst einen Gabelschaft, der mit einer Vorderradgabel verbindbar ist, wobei der Gabelschaft vorzugsweise einstückig mit der Vorderradgabel ausgebildet ist. Ferner weist die Vorbau-Verbindungseinrichtung einen Vorbauschaft auf. Dieser ist mit dem Lenkervorbau verbindbar. In bevorzugter Ausführungsform ist der Vorbauschaft einstückig mit dem Vorbau ausgebildet. Der Vorbauschaft umgibt in montiertem Zustand den Gabelschaft. Hierbei umgibt der Vorbauschaft den Gabelschaft in Umfangsrichtung, vorzugsweise vollständig. Erfindungsgemäß ist zwischen dem Gabelschaft und dem Vorbauschaft ein Klemmelement angeordnet. Mit Hilfe des Klemmelements ist ein klemmendes Verbinden des Gabelschafts mit dem Vorbauschaft möglich. Ferner ist ein Fixierelement vorgesehen, das das Klemmelement in der geklemmten Position hält.

Mithilfe der erfindungsgemäßen Vorbau-Verbindungseinrichtung ist es insbesondere möglich die Höhe des Vorbaus auf einfache Weise einzustellen, indem die Lage des Vorbauschafts relativ zur Lage des Gabelschafts in Längsrichtung verändert wird. Es ist allenfalls erforderlich zwischen einem oberen Ende des Gabelrohrs des Fahrradrahmens und einer Unterseite des Vorbaus Abstandselemente, wie Abstandsringe oder Abstandshülsen vorzusehen. Insbesondere ist ein Ablängen des Gabelschafts nicht erforderlich.

Erfindungsgemäß weist das Gabelrohr einen Schlitz auf, durch den das Fixierelement zugänglich ist. Hierdurch ist es auf einfache Weise möglich, das insbesondere als Schraube ausgebildete Fixierelement, durch das das Klemmelement fixiert wird, nach der Justage die Höhe des Vorbaus und/oder nach dem Vorspannen der Lenkkopflager zu fixieren.

Der in dem Gabelrohr vorgesehene Schlitz kann zusätzlich oder an Stelle der Zugänglichkeit für das Fixierelement auch zum Hindurchführen von Kabeln dienen.

Vorzugsweise weist der Gabelschaft eine Anlagefläche auf, an der das Klemmelement anliegt. Besonders bevorzugt ist es hierbei, dass die Anlagefläche zu einer Längsachse des Gabelschafts geneigt ist. Hierbei kann die Anlagefläche des Gabelschafts als eine durchgehende Fläche ausgebildet sein, oder auch durch einen Rohrrand ausgebildet sein. Insbesondere bei rohrförmigen hohlen Gabelschäften ist die Anlagefläche durch einen Rohrrand ausgebildet. Des Weiteren ist es bevorzugt, dass das Klemmelement eine Klemmfläche aufweist, die in montiertem Zustand an der Anlagefläche des Gabelschafts anliegt. Vorzugsweise handelt es sich bei dem Klemmelement um ein rohrförmiges Element, das abgeschrägt ist, wobei der Winkel der Abschrägung des Klemmelements dem Winkel der Abschrägung des Gabelschaftes im Wesentlichen entspricht. Hierbei ist es besonders bevorzugt, dass das Klemmelement keilförmig ausgebildet ist, wobei die Klemmfläche des keilförmig ausgebildeten Klemmelements gegenüber der Längsachse des Vorbauschafts in montiertem Zustand geneigt ist. Die Längsachse des Vorbauschafts ist vorzugsweise identisch mit der Längsachse des Gabelschafts. Ferner sind die Neigungswinkel der Klemmfläche und der Anlagefläche vorzugsweise im Wesentlichen identisch. In bevorzugter Ausführungsform weist das Klemmelement somit eine konvex gekrümmte Außenseite auf. Diese weist insbesondere einen konstanten Krümmungsradius auf, der im Wesentlichen dem Innendurchmesser des Vorbauschafts entspricht, sofern der Vorbauschaft rohrförmig mit kreiszylindrischem Querschnitt ausgebildet ist.

Zur Montage wird der Gabelschaft von unten in das Gabelrohr des Fahrradrahmens eingesteckt. Gleichzeitig wird von oben der Vorbauschaft in das Gabelrohr eingesteckt, sodass der Vorbauschaft den Gabelschaft in Umfangsrichtung umschließt. Innerhalb des Vorbauschafts ist in bevorzugter Ausführungsform das Klemmelement angeordnet. In der gewünschten Höhe des Vorbaus wird nun das Klemmelement klemmend fixiert, sodass der Vorbauschaft mit dem Gabelschaft fest verbunden ist. Hierzu ist erfindungsgemäß ein Fixierelement vorgesehen. Beispielsweise könnte zunächst eine klemmende Fixierung durch Eindrücken des Klemmelements in Längsrichtung erfolgen, sodass der Vorbauschaft mit dem Gabelschaft verbunden ist. Anschließend erfolgt eine Fixierung des Klemmelements durch das Fixierelement. Hierbei kann es sich beispielsweise um ein von oben in den Vorbauschaft eingeführtes Fixierelement, wie eine Schraube oder dergleichen handeln, die das Klemmelement nach unten drückt.

In besonders bevorzugter Ausführungsform weist das Fixierelement einen Kopf auf, der an einer Außenseite des Vorbauschafts anliegt. In montiertem Zustand verläuft das Fixierelement somit vorzugsweise horizontal. Hierbei kann es sich bei dem Fixierelement wiederum um eine Schraube handeln, die das Klemmelement in der geklemmten Position fixiert. Besonders bevorzugt ist es hierbei ferner, dass das Fixierelement mit einem Schaft verbunden ist, der insbesondere durch das Klemmelement ragt. Dies hat den Vorteil, dass durch Betätigen des Fixierelements gleichzeitig ein Klemmen erfolgen kann. Dies erfolgt derart, dass der Schaft in montiertem Zustand gegen die Anlagefläche des Gabelschafts oder ein mit dem Gabelschaft verbundenes Anlageelement drückt. Durch betätigen des Fixierelements, das insbesondere als Schraube ausgebildet ist, erfolgt somit bei dieser bevorzugten Ausführungsform ein klemmen des Fixierelements bei gleichzeitigem Fixieren.

In einer besonders bevorzugten Ausführungsform weist das Klemmelement eine Ausnehmung auf, in der ein Kopf des Fixierelements in montiertem Zustand angeordnet ist. Ferner weist das Fixierelement einen mit dem Kopf verbundenen Schaft auf. Dieser ragt vorzugsweise durch das Klemmelement hindurch. In montiertem Zustand drückt der Schaft gegen die Anlagefläche des Gabelschafts oder gegen ein mit dem Gabelschaft verbundenes Anlageelement. Hierbei ist es besonders bevorzugt, dass in dem Klemmelement ein Innengewinde angeordnet ist und der Schaft ein Außengewinde aufweist. Durch Drehen des Fixierelements kann somit ein klemmendes Verbinden des Gabelschafts mit dem Vorbauschaft durch das Klemmelement realisiert werden.

Erfindungsgemäß weist der insbesondere hohl ausgebildete Vorbauschaft einen Längsschlitz auf. Insofern ist es möglich das Fixierelement in dem Vorbauschaft in Längsrichtung zu verschieben, um die gewünschte Höhe des Vorbaus, vorzugsweise stufenfrei, einstellen zu können. Des Weiteren ist es möglich durch den Längsschlitz im Vorbauschaft Kabel wie Bremskabel, Schaltkabel, elektrische Leitungen und dergleichen hindurch zu führen. Derartige Kabel können beispielsweise vom Lenker durch den Vorbau in den Vorbauschaft und sodann durch den Längsschlitz im Vorbauschaft in den Rahmen, insbesondere das Oberrohr oder das Unterrohr des Rahmens, eingeführt werden.

Aufgrund des in dem Vorbauschaft vorgesehene Längsschlitz ist das Fixierelement auf einfache Weise zugänglich.

Des Weiteren ist es bevorzugt, dass das Klemmelement mindestens eine Öffnung aufweist um Kabel wie Bremskabel, Schaltkabel oder elektrische Kabel durch das Klemmelement hindurchführen zu können. Derartige Kabel können somit beispielsweise vom Lenker durch den Vorbau in den Vorbauschaft sodann durch das Klemmelement und anschließend durch den Längsschlitz des Vorbauschafts in den Rahmen eingeführt werden.

Bei einer bevorzugten Weiterbildung der Erfindung ist der Vorbauschaft von einem oberen Lenkkopflager und der Gabelschaft mit einem unteren Lenkkopflager umgeben. Gegebenenfalls ist der Gabelschaft im Bereich des unteren Lenkkopflagers derart ausgebildet, dass er einen vergrößerten Durchmesser aufweist, sodass obwohl der Gabelschaft innerhalb des Vorbauschafts angeordnet ist, ein Lager mit herkömmlichem Durchmesser verwendet werden kann.

Zum Vorspannen der Lenkkopflager ist in dem Gabelschaft ein Aufnahmeelement angeordnet, das mit einem Spannelement zusammen wirkt. Das Spannelement stützt sich vorzugsweise am Vorbauschaft oder an dem mit dem Vorbauschaft verbundenen Vorbau ab. Besonders bevorzugt ist es, dass das Spannelement als Schraubelement insbesondere als Schraube ausgebildet ist. Ein Gewinde des Spannelements greift vorzugsweise in eine Bohrung mit Innengewinde an dem Aufnahmeelement ein. Durch entsprechendes Spannen des Spannelements erfolgt ein Zusammenziehen von Gabelschaft und Vorbauschaft bzw. Vorbau in Längsrichtung. Hierdurch erfolgt ein Vorspannen der beiden Lenkkopflager.

Zur Montage des erfindungsgemäßen Fahrrad-Elements kann somit der Gabelschaft und der Vorbauschaft zusammen mit dem Klemmelement innerhalb des Gabelrohrs angeordnet werden. Vor dem Fixieren des Klemmelements erfolgt das Anziehen des Spannelements, sodass die beiden Lenkkopflager entsprechend vorgespannt sind. Anschließend erfolgt das Anordnen des Klemmelements auf der richtigen Höhe, wobei dies insbesondere aufgrund der schräg ausgerichteten Anlagefläche des Gabelschafts automatisch erfolgt, das Anziehen des Spannelements, sodass die beiden Lenkkopflager entsprechend vorgespannt sind. Anschließend erfolgt das Anordnen des Klemmelements auf der richtigen Höhe, wobei dies insbesondere aufgrund der schräg ausgerichteten Anlagefläche des Gabelschafts automatisch erfolgt, sodass das Klemmelement in der entsprechenden Lage mit dem Fixierelement fixiert werden kann. Hierbei erfolgt automatisch auch das klemmende Verbinden des Gabelschafts mit dem Vorbauschaft. Gegebenenfalls kann durch Vorsehen von Zwischenringen oder anderen Abstandselementen vor dem Anziehen des Spannelements die Höhe des Vorbauschafts und somit des Vorbaus eingestellt werden.

Nachfolgend wird die Erfindung anhand einer bevorzugten Ausführungsform unter Bezugnahme auf die anliegenden Zeichnungen näher erläutert:
Es zeigen:
- Figur 1: eine schematische Schnittansicht eines Fahrrad-Elements,
- Figur 2: eine schematische Schnittansicht einer Vorbau-Verbindungseinrichtung,
- Figur 3: eine schematische Draufsicht des Klemmelements und
- Figur 4: eine schematische Seitenansicht des Klemmelements.

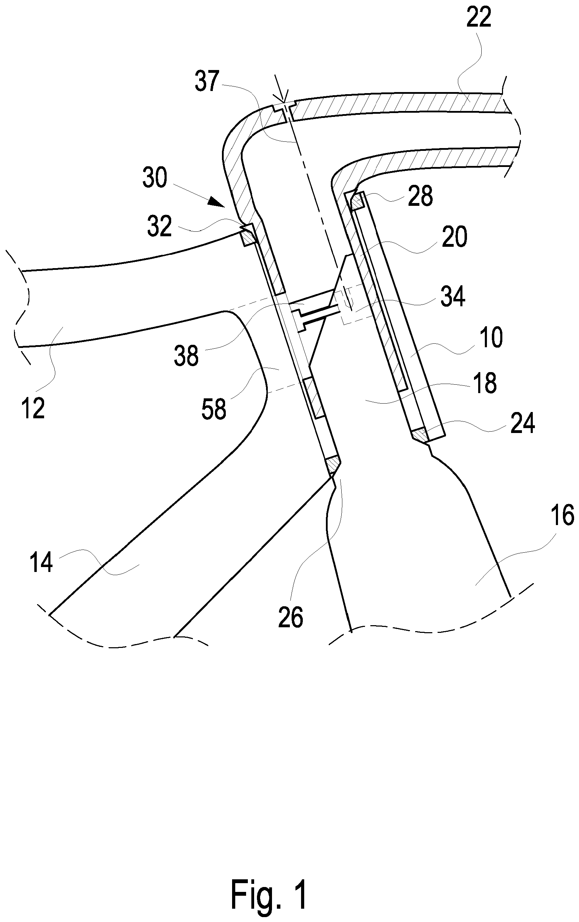

Figur 1 zeigt ein Fahrrad-Element, d.h. einen Teil eines Fahrrads im Bereich eines Gabelrohrs 10. Das Gabelrohr 10, das Teil eines Fahrradrahmens ist, ist im dargestellten Ausführungsbeispiel mit einem Oberrohr 12 und einem Unterrohr 14 verbunden. In dem Gabelrohr 10 ist ein mit einer Vorderradgabel 16 insbesondere einstückig ausgebildeter Gabelschaft 18 angeordnet. Des Weiteren ist in dem Gabelrohr 10 ein den Gabelschaft 18 in Umfangsrichtung umgebender Vorbauschaft 20 vorgesehen. Im dargestellten Ausführungsbeispiel ist der Vorbauschaft 20 einstückig mit einem schematisch dargestellten Vorbau 22 ausgebildet. Der Vorbau 22 trägt den nicht dargestellten Fahrradlenker oder ist mit diesem ggf. ebenfalls einstückig ausgebildet.

Der Gabelschaft 18 ist von einem unteren Lenkkopflager 24 umgeben, das an einer Fase 26 bzw. einer Umfangserweiterung des Gabelschaftes 18 angeordnet ist. Ferner ist das Lenkkopflager 24 im Gabelrohr 10 angeordnet. Ein oberes Lenkkopflager 28 umgibt den Vorbauschaft 20 und stützt sich an einem Ansatz 30 des Vorbaus ab, wobei der Ansatz 30 insbesondere in einem Übergangsbereich zwischen dem Vorbauschaft 20 und dem im dargestellten Ausführungsbeispiel einstückig mit dem Vorbauschaft 20 verbundenen Vorbau 22 angeordnet ist. Zwischen dem oberen Lenkkopflager 28 und dem Ansatz 30 kann mindestens ein Kompressionsring 32 vorgesehen sein. Je nach Dicke des Kompressionsrings 32 oder durch Vorsehen mehrerer Kompressionsringe kann die Höhe des Vorbaus variiert werden.

In einem Endbereich des Gabelschaftes 18 ist ein Aufnahmeelement 34 angeordnet. Das Aufnahmeelement 34 weist eine Bohrung 36 mit Innengewinde auf. In diesem ist ein im dargestellten Ausführungsbeispiel als Schraube 37 ausgebildetes Spannelement angeordnet. Durch Anziehen der Schraube 37 erfolgt ein Vorspannen der beiden Lenkkopflager 24, 28.

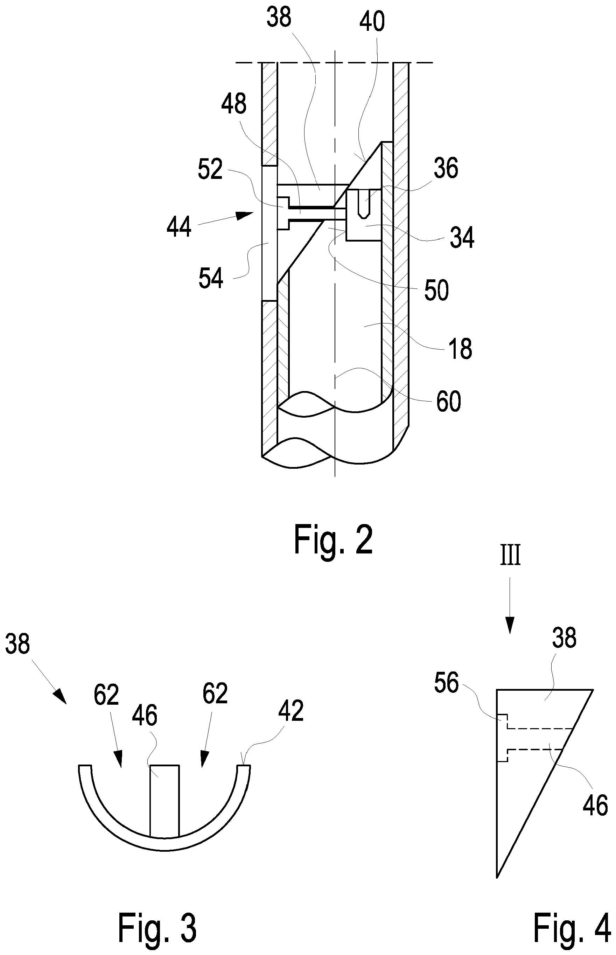

Zur Verbindung des Gabelschafts 18 mit dem Vorbauschaft 20 ist ein Klemmelement 38 vorgesehen. Das insbesondere keilförmig ausgebildete Klemmelement 38 ist innerhalb des Vorbauschafts 20 angeordnet. Zur Fixierung ist das freie Ende des Gabelschafts 18 abgeschrägt, sodass eine Anlagefläche 40 ausgebildet ist. Als Anlagefläche 40 dient insbesondere die durch den rohrförmigen Gabelschaft 18 ausgebildete in Draufsicht im Wesentlichen ringförmige Fläche. Das in Seitenansicht (Figur 4) im Wesentlichen keilförmig ausgebildete Klemmelement 38 weist eine in montiertem Zustand (Figur 2) an der Anlagefläche anliegende Klemmfläche 42 auf. Diese weist im Wesentlichen eine Breite auf, die der Breite der Anlagefläche 40 entspricht, wenn das Klemmelement 38, wie insbesondere in Figur 3 ersichtlich, aus einem Rohrsegment hergestellt ist.

Zum Fixieren des Klemmelements 38 ist ferner ein in dem dargestellten Ausführungsbeispiel als Schraube 44 ausgebildetes Fixierelement vorgesehen. Die Schraube 44 ist in einem hülsenförmigen Element 46 (Figur 3) des Klemmelements 38 angeordnet. Das hülsenförmige Element 46 weist ein Innengewinde auf. Durch Einschrauben der Schraube 44 in das hülsenförmige Element 46 wird der Schraubenschaft 48 gegen eine Anlagefläche 50 gedrückt. Im dargestellten Ausführungsbeispiel ist die Anlagefläche 50 durch eine Vorderseite des Aufnahmeelements 34 ausgebildet.

Ein Kopf 52 der Schraube 44 ist in einer Ausnehmung 56 des Klemmelements 38 angeordnet, sodass der Kopf 52 nicht vorsteht. Der Kopf 52 der Schraube 44 ist durch einen Längsschlitz 54 in dem Vorbauschaft zugänglich. Ein entsprechender Schlitz 56 ist auch in dem Gabelrohr 10 (Figur 1) vorgesehen, sodass die Schraube 44 auf einfache Weise zugänglich ist.

Zur Montage wird somit der Gabelschaft 18 von unten und der Vorbauschaft 20 von oben in das Gabelrohr 10 eingeführt, wobei das Klemmelement 38 ebenfalls bereits im Vorbauschaft 20 angeordnet ist. Anschließend erfolgt mit Hilfe der Schraube 37 ein Vorspannen der beiden Lenkkopflager 24, 28. Anschließend erfolgt ein klemmendes Verbinden des Gabelschafts 18 mit dem Vorbauschaft 20 durch Anziehen der Schraube 44. Hierdurch entsteht eine klemmende Befestigung, die durch die geneigte Anlagefläche 40 sowie die ebenfalls geneigte Klemmfläche 42 hervorgerufen wird. Die beiden Flächen weisen im Wesentlichen den gleichen Neigungswinkel auf und sind in entgegengesetzte Richtung relativ zu einer Längsachse 60 geneigt.

Des Weiteren werden beispielsweise vom Lenker durch den hohlen Vorbau 22 Kabel wie Bremskabel, Schaltkabel und/oder Stromkabel in den Rahmen, d.h. beispielsweise in das Oberrohr 12 oder das Unterrohr 14 geführt. Hierzu werden die Kabel durch den hohlen Vorbau 22 in den ebenfalls hohlen Vorbauschaft 20 eingeführt. Das Klemmelement 38 weist, wie insbesondere in Figur 3 sichtbar ist, seitlich neben dem hülsenförmigen Element 46 jeweils Öffnungen 62 zum Hindurchführen der Kabel auf. Die Kabel können sodann durch den Längsschlitz 54 im Vorbauschaft 20 hindurch in das Oberrohr 12 oder das Unterrohr 14 geführt werden.

## Patentansprüche

1. Fahrrad-Element mit einem Fahrradrahmen mit einem Gabelrohr (10) und
einer zumindest teilweise in dem Gabelrohr (10) angeordneten Vorbau-Verbindungseinrichtung zum Verbinden eines Lenkervorbaus (22) mit einer Vorderradgabel (16), mit einem mit der Vorderradgabel (16) verbindbaren Gabelschaft (18),
einem mit dem Lenkervorbau (22) verbindbaren Vorbauschaft (20), der den Gabelschaft (18) in montiertem Zustand umgibt, einem zwischen dem Gabelschaft (18) und dem Vorbauschaft (20) angeordnetem Klemmelement (38) zum klemmenden Verbinden des Gabelschafts (18) mit dem Vorbauschaft (20) und einem das Klemmelement (38) in geklemmter Position haltenden Fixierelement (44),
**dadurch gekennzeichnet, dass** das Gabelrohr (10) einen Schlitz (58) und der Vorbauschaft (20) einen Längsschlitz (54) aufweist,
durch die das Fixierelement (44) zugänglich ist.

2. Fahrrad-Element nach Anspruch 1, **dadurch gekennzeichnet, dass** der Vorbauschaft (20) von einem oberen Lenkkopflager (28) und der Gabelschaft (18) von einem unteren Lenkkopflager (24) umgeben ist.

3. Fahrrad-Element nach Anspruch 2, **dadurch gekennzeichnet, dass** zum Vorspannen der Lenkkopflager (24, 28) in dem Gabelschaft (18) ein Aufnahmeelement (34) angeordnet ist, das mit einem sich an dem Vorbauschaft (20) oder dem mit dem Vorbauschaft (20) verbundenen Vorbau (22) abstützenden Spannelement (37) zusammen wirkt

4. Fahrrad-Element nach einem der Ansprüche 1 bis 3, **dadurch gekennzeichnet, dass** der Gabelschaft (18) eine Anlagefläche (40) aufweist, an der das Klemmelement (38) anliegt, wobei die Anlagefläche (40) vorzugsweise zu einer Längsachse (60) des Gabelschafts (18) geneigt ist.

5. Fahrrad-Element nach Anspruch 4, **dadurch gekennzeichnet, dass** das Klemmelement (38) eine Klemmfläche (42) aufweist, die in montiertem Zustand an der Anlagefläche (40) des Gabelschafts (18) anliegt.

6. Fahrrad-Element nach Anspruch 5, **dadurch gekennzeichnet, dass** das Klemmelement (38) keilförmig ausgebildet ist, wobei die Klemmfläche (42) gegenüber einer Längsachse (60) des Vorbauschafts (20) in montiertem Zustand geneigt ist.

7. Fahrrad-Element nach einem der Ansprüche 1 bis 6, **dadurch gekennzeichnet, dass** das Fixierelement (44) einen an einer Außenseite des Vorbauschafts (20) anliegenden Kopf (52) und einen mit dem Kopf (52) verbundenen Schaft (48) aufweist, der in montiertem Zustand gegen die Anlagefläche (40) oder ein mit dem Gabelschaft (18) verbundenes Anlageelement (50) drückt.

8. Fahrrad-Element nach einem der Ansprüche 1 bis 7, **dadurch gekennzeichnet, dass** das Klemmelement (38) eine Ausnehmung (56) aufweist, in der ein Kopf (52) des Fixierelements (44) angeordnet ist, wobei mit dem Kopf (52) ein Schaft (48) verbunden ist, der in montiertem Zustand gegen eine Anlagefläche (40) des Gabelschafts (18) oder ein mit dem Gabelschaft (18) verbundenes Anlageelement (50) drückt.

9. Fahrrad-Element nach einem der Ansprüche 1 bis 8, **dadurch gekennzeichnet, dass** der Vorbauschaft (20) einstückig mit dem Vorbau (22) ausgebildet ist.

10. Fahrrad-Element nach einem der Ansprüche 1 bis 9, **dadurch gekennzeichnet, dass** das Klemmelement (38) mindestens eine Öffnung (62) zum Hindurchführen von Kabeln aufweist.

## Claims

1. A bicycle element having a bicycle frame with a steerer tube (10) and a handlebar stem connection device being at least partially arranged in a steerer tube (10) for connecting a handlebar stem (22) with a front wheel fork (16), comprising
a steerer tube (18) connectible with the front wheel fork (16),
a handlebar stem tube (20) connectible with the handlebar stem (22), the handlebar stem tube (20) surrounding the steerer tube (18) in a mounted state,
a clamping element (38) for a clamping connection of the steerer tube (18) with the handlebar stem tube (20), the clamping element (38) being arranged between the steerer tube (18) and the handlebar stem tube (20), and
a fixing element (44) holding the clamping element (38) in a clamped position,
**characterized in that** the steerer tube (10) comprises a slit (58) and the handlebar stem tube (20) comprises a longitudinal slit (54) through which the fixing element (44) is accessible.

2. The bicycle element according to claim 1, **characterized in that** the handlebar stem tube (20) is surrounded by an upper steering bearing (28) and the steerer tube (18) is surrounded by a lower steering bearing (24).

3. The bicycle element according to claim 2, **characterized in that** a receiving element (34) is arranged in the steerer tube (18) for the pretensioning of the steering bearings (24, 28), the receiving element (34) cooperating with a tensioning element (37) supported at the handlebar stem tube (20) or the handlebar stem (22) connected with the handlebar stem tube (20).

4. The bicycle element according to one of claims 1 to 3, **characterized in that** the steerer tube (18) has a contact surface (40) on which the clamping element (38) rests, wherein the contact surface (40) is preferably inclined with respect to a longitudinal axis (60) of the steerer tube (18).

5. The bicycle element according to claim 4, **characterized in that** the clamping element (38) has a clamping surface (42) which, in the mounted state, rests on the contact surface (40) of the steerer tube (18).

6. The bicycle element according to claim 5, **characterized in that** the clamping element (38) is wedge-shaped, wherein the clamping surface (42) is inclined with respect to a longitudinal axis (60) of the handlebar stem tube (20) in the mounted state.

7. The bicycle element according to one of claims 1 to 6, **characterized in that** the fixing element (44) has a head (52) resting on an outer side of the handlebar stem tube (20) and a shaft (48) connected with the head (52), wherein the shaft (48), in the mounted state, presses against the contact surface (40) or against a contact element (50) connected with the steerer tube (18).

8. The bicycle element according to one of claims 1 to 7, **characterized in that** the clamping element (38) has a recess (56) in which a head (52) of the fixing element (44) is arranged, a shaft (48) being connected with the head (52), wherein the shaft (48), in the mounted state, presses against a contact surface (40) of the steerer tube (18) or against a contact element (50) connected with the steerer tube (18).

9. The bicycle element according to one of claims 1 to 8, **characterized in that** the handlebar stem tube (20) is integrally formed with the handlebar stem (22).

10. The bicycle element according to one of claims 1 to 9, **characterized in that** the clamping element (38) has at least one opening (62) for passing cables therethrough.

## Revendications

1. Élément de vélo comprenant un cadre de vélo pourvu d'un tube de fourche (10) et
un dispositif de raccordement de potence disposé au moins en partie dans le tube de fourche (10) pour le raccordement d'une potence de guidon (22) avec une fourche avant (16), comprenant
une tige de fourche (18) pouvant être raccordée à la fourche avant (16),
une tige de potence (20) pouvant être raccordée à la potence de guidon (22) et qui entoure la tige de fourche (18) à l'état monté,
un élément de serrage (38) disposé entre la tige de fourche (18) et la tige de potence (20) pour le raccordement par serrage de la tige de fourche (18) avec la tige de potence (20), et
un élément de fixation (44) retenant l'élément de serrage (38) en position serrée,
**caractérisé en ce que** le tube de fourche (10) comprend une fente (58) et la tige de potence (20) une fente longitudinale (54), à travers laquelle est accessible l'élément de fixation (44).

2. Élément de vélo selon la revendication 1, **caractérisé en ce que** la tige de potence (20) est entourée d'un palier de tête de guidon supérieur (28) et la tige de fourche (18) d'un palier de tête de guidon inférieur (24).

3. Élément de vélo selon la revendication 2, **caractérisé en ce qu'**est disposé dans la tige de fourche (18), pour précontraindre les paliers de tête de guidon (24, 28), un élément de réception (34) qui coopère avec un élément tendeur (37) prenant appui sur la tige de potence (20) ou sur la potence (22) reliée à la tige de potence (20).

4. Élément de vélo selon l'une des revendications 1 à 3, **caractérisé en ce que** la tige de fourche (18) comprend une surface d'appui (40) contre laquelle s'appuie l'élément de serrage (38), la surface d'appui (40) étant inclinée de préférence par rapport à un axe longitudinal (60) de la tige de fourche (18).

5. Élément de vélo selon la revendication 4, **caractérisé en ce que** l'élément de serrage (38) comprend une surface de serrage (42) qui, à l'état monté, s'appuie contre la surface d'appui (40) de la tige de fourche (18).

6. Élément de vélo selon la revendication 5, **caractérisé en ce que** l'élément de serrage (38) est configuré en forme de coin, la surface de serrage (42) étant inclinée, à l'état monté, par rapport à un axe longitudinal (60) de la tige de potence (20).

7. Élément de vélo selon l'une des revendications 1 à 6, **caractérisé en ce que** l'élément de fixation (44) comprend une tête (52) en appui sur une face extérieure de la tige de potence (20) et une tige (48) reliée à la tête (52) qui, à l'état monté, appuie contre la surface d'appui (40) ou un élément d'appui (50) relié à la tige de fourche (18).

8. Élément de vélo selon l'une des revendications 1 à 7, **caractérisé en ce que** l'élément de serrage (38) comprend un évidement (56) dans lequel est disposée une tête (52) de l'élément de fixation (44), une tige (48) étant reliée à la tête (52), laquelle tige (48), à l'état monté, appuie contre une surface d'appui (40) de la tige de fourche (18) ou un élément d'appui (50) relié à la tige de fourche (18).

9. Élément de vélo selon l'une des revendications 1 à 8, **caractérisé en ce que** la tige de potence (20) est réalisée d'un seul tenant avec la potence (22).

10. Élément de vélo selon l'une des revendications 1 à 9, **caractérisé en ce que** l'élément de serrage (38) comprend au moins une ouverture (62) pour le passage de câbles.
